# EUROPEAN PATENT SPECIFICATION

(11) **EP 2 648 173 B1**
(45) Date of publication and mention of the grant of the patent: **01.04.2015**
(21) Application number: 13162052.8
(22) Date of filing: 03.04.2013
(51) Int. Cl.: G08G 1/16

(54) **Method and system for improving safety during driving of a motor vehicle**
Verfahren und System zur Erhöhung der Sicherheit während des Fahrens eines Kraftfahrzeugs
Procédé et système pour améliorer la sécurité pendant la conduite d'un véhicule automobile

(30) Priority: 04.04.2012 SE 1250342
(43) Date of publication of application: 09.10.2013
(73) Proprietor: Scania CV AB (publ), 151 87 Södertälje (SE)
(72) Inventor: Claezon, Fredrich, SE-139 53 VÄRMDÖ (SE)

(56) References cited:
- WO-A1-2011/028686
- DE-A1-102007 025 147
- DE-A1-102009 015 913
- DE-A1-102011 010 865
- US-A1- 2012 062 745
- US-B1- 6 476 731

## Description

### TECHNICAL FIELD

The invention relates to a method for improving safety during driving of a motor vehicle according to the preamble of claim 1. It relates also to a system for improving safety during driving of a motor vehicle according to the preamble of claim 6. It relates also to a motor vehicle. It relates in addition to a computer programme and a computer programme product.

### BACKGROUND

A safety problem during driving of driving motor vehicles is so-called dead angles or "blind spots" which make it difficult to detect vehicles in adjacent traffic lanes, which consequent risk of accidents when changing lanes. The problem is greatest on the vehicle's passenger side, where it is more difficult for the driver to detect vehicles at such blind spots. An example of a case where accidents have repeatedly occurred is where for example left-hand drive vehicles intended for driving on the right are used in countries which drive on the left, and vice versa, making it difficult for the driver to see vehicles overtaking in the traffic lane on the right. Very serious accidents may occur when a car overtakes a truck, through the truck driver not detecting the overtaking vehicle and running into its rear as it passes.

One solution to this problem on trucks is to provide a wide angle lens, a so-called Fresnel lens, on the passenger-side window to enable the driver to see more of the area outside the truck's cab on the passenger side. A disadvantage of such a wide angle lens is that direct visibility is markedly impaired.

There are also radar systems mounted on cabs to provide support when changing lanes. Radar-based solutions are used more as a warning system and many drivers may regard them as less reliable in that they cannot see for themselves the reason for the warning. Radar also works less well on soft objects such as pedestrians and cyclists/motorcycles.

US 2009243824 A1 refers to a display unit integrated in a rearview mirror, making it possible for the view from a side camera to be activated and presented in the display unit in conjunction with flasher signals.

US 2010097199 A1 refers to a monitor whereby the view from a side camera can be activated and presented in conjunction with flasher signals.

WO 2011/028686 A1 refers to a vehicular imaging and display system including a rear backup camera at a rear portion of a vehicle, a video processor for processing image data captured by the rear camera, and a video display screen responsive to the video processor to display video images.

### OBJECT OF THE INVENTION

One object of the present invention is to propose a method for improving safety during driving of a motor vehicle whereby the risk of accidents when changing traffic lanes is reduced.

One object of the present invention is to propose a system for improving safety during driving of a motor vehicle whereby the risk of accidents when changing traffic lanes is reduced.

### SUMMARY OF THE INVENTION

These and other objects indicated by the description set out below are achieved by means of a method and a system for improving safety during driving of a motor vehicle, a motor vehicle, a computer programme and a computer programme product of the kind indicated in the introduction which further present the features indicated in the characterising parts of the attached independent claims 1, 4, 7, 8 and 9. Preferred embodiments of the method and the system are defined in the attached dependent claims 2-3 and 5-6.

According to the invention, the objects are achieved with a method for improving safety during driving of a motor vehicle, comprising the steps of gathering information about traffic in traffic lanes adjacent to the vehicle and, when necessary, presenting said information for the vehicle's operator, comprising the steps of activating an existing function of the vehicle for generating an overhead view of the vehicle, and causing said existing function to provide an overhead view which incorporates traffic information about adjacent traffic lanes in accordance with the operator's intentions with regard to the driving of the vehicle. The driver is thus provided with an overhead view which makes it easier to detect vehicles in adjacent traffic lanes in that such a view is easy for the driver to interpret. Safety during driving of the vehicle is thereby enhanced in that the risk of accidents when changing lanes decreases. The driver gains a better understanding of the surroundings in that the overhead view may be used as an extra mirror when there is need for better vision, thereby further enhancing safety. The function is also used to provide overhead views for new areas of use, thereby increasing the usefulness of such a function.

Furthermore, the step of activating said existing function of the vehicle for generating an overhead view only takes place automatically at above a certain speed of the vehicle, thereby avoiding unnecessary activations which might be a nuisance to the driver. In one variant, the activation might take place at speeds at which the consequences of an accident when changing lanes would be serious. In one variant the activation may only take place at over 70 km/h.

According to the present invention, the step of activating said existing function of the vehicle for generating an overhead view takes place before the operator changes lanes. Safety is thus improved in that the driver is provided with a clear overhead view before the lane change and may thus assess whether it is safe to change lanes, thereby reducing the accident risk.

In one embodiment of the method, the step of activating said existing function of the vehicle for generating an overhead view takes place automatically upon and/or before lateral movements of the vehicle. Safety is thus improved in that the driver is automatically provided with an overhead view, and if a lane change has already begun he/she may stop it if there is in the respective traffic lane another vehicle which represents an obstacle, and in cases where the driver had not yet commenced but intends to make a lane change he/she may refrain if there is in the respective lane another vehicle which represents an obstacle, and may wait until it is safe to change lanes, thereby reducing the accident risk.

In one embodiment of the method, said automatic activation takes place upon driving direction indication, vehicle departure from its traffic lane, information about access to adjacent lanes, external information about traffic density along the vehicle's itinerary. The activation thus only takes place when necessary, avoiding unnecessary activations of the overhead view which might distract the driver and/or occupy display space required for other relevant information.

According to the invention, the objects are achieved with a system for improving safety during driving of a motor vehicle, comprising means for gathering information about traffic in traffic lanes adjacent to the vehicle and means for, when necessary, presenting said information for the vehicle's operator, comprising means for activating an existing function of the vehicle for generating an overhead view of the vehicle, and means for causing said existing function to provide an overhead view which incorporates traffic information about adjacent traffic lanes in accordance with the operator's intentions with regard to the driving of the vehicle. Safety during driving of the vehicle is thereby enhanced in that the risk of accidents when changing lanes decreases. The driver gains a better understanding of the surroundings in that the overhead view may be used as an extra mirror when there is need for better vision, thereby further enhancing safety. The function is also used to provide overhead views for new areas of use, thereby increasing the usefulness of such a function.

Furthermore, said means for activating said existing function of the vehicle for generating an overhead view comprise means for only activating said function automatically at above a certain speed of the vehicle, thereby avoiding unnecessary activations which might be a nuisance to the driver. In one variant, the activation might take place at speeds at which the consequences of an accident when changing lanes would be serious. In one variant the activation may only take place at over 70 km/h.

According to the present invention said means for activating said existing function of the vehicle for generating an overhead view comprise means for activating said function before the operator changes lanes. Safety is thus improved in that the driver is provided with a clear overhead view before the lane change and may thus assess whether it is safe to change lanes, thereby reducing the accident risk.

In one embodiment of the system, said means for activating said existing function of the vehicle for generating an overhead view comprise means for automatically activating said function upon and/or before lateral movements of the vehicle. Safety is thus improved in that the driver is automatically provided with an overhead view, and if a lane change has already begun he/she may stop it if there is in the respective traffic lane another vehicle which represents an obstacle, and in cases where the driver has not yet commenced but intends to make a lane change he/she may refrain if there is in the respective lane another vehicle which represents an obstacle, and may wait until it is safe to change lanes, thereby reducing the accident risk.

In one embodiment of the system said means for automatic activation comprise means for driving direction indication, means for determining vehicle departure from its traffic lane, means for providing information about access to adjacent lanes, means for determining external information about traffic density along the vehicle's itinerary. The activation thus only takes place when necessary, avoiding unnecessary activations of the overhead view which might distract the driver and/or occupy display space required for other relevant information.

### DESCRIPTION OF DRAWINGS

The present invention will be better understood by reading the detailed description set out below in conjunction with the attached drawings, in which the same reference notations are used for similar items throughout the various views, and
Fig. 1 schematically illustrates a motor vehicle according to an embodiment of the present invention.
Fig. 2 schematically illustrates a system for improving safety during driving of a motor vehicle according to an embodiment of the present invention,
Fig. 3 schematically illustrates an overhead view presented in a display according to an embodiment of the present invention,
Fig. 4 is a schematic block diagram of a method for improving safety during driving of a motor vehicle according to the present invention, and
Fig. 5 schematically illustrates a computer according to an embodiment of the present invention.

### DESCRIPTION OF EMBODIMENTS

The term "link" refers herein to a communication link which may be a physical connection such as an opto-electronic communication line, or a non-physical connection such as a wireless connection, e.g. a radio link or microwave link.

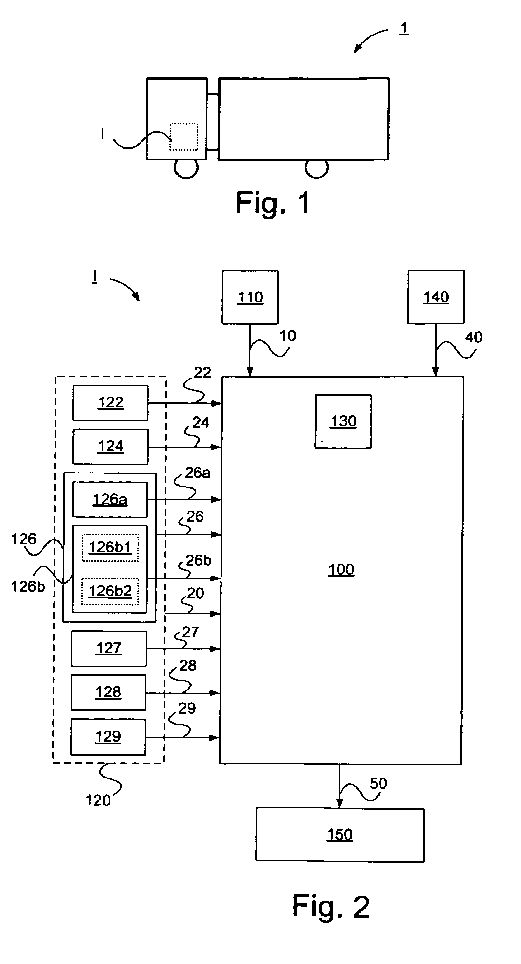

Fig. 1 illustrates schematically a motor vehicle 1 according to an embodiment of the present invention. The vehicle exemplified is a heavy vehicle in the form of a truck. It may alternatively be any suitable vehicle, e.g. a bus or a car. The vehicle is provided with a system I according to the present invention.

Fig. 2 schematically illustrates a system I for improving safety during driving of a motor vehicle according to an embodiment of the present invention.

The system I comprises an electronic control unit 100 for said improvement of safety when driving a motor vehicle.

The system I comprises traffic information gathering means 110 to gather information about traffic in traffic lanes which are adjacent to the vehicle. Said traffic information gathering means comprises camera means situated round the vehicle to detect the vehicle and areas adjacent to the vehicle.

The system I further comprises overhead view generation activation means 120 to activate an existing function of the vehicle for generating an overhead view of the vehicle.

Said overhead view generation activation means 120 comprise driving direction indication means 122 to indicate the vehicle's intended direction of movement. Said driving direction indication means comprises operating means for activation of the vehicle's right and left flashers.

Said overhead view generation activation means 120 comprise traffic lane departure determination means 124.

Said traffic lane departure determination means 124 comprises a camera means preferably situated in the forward region of the vehicle and configured to determine distances from traffic lane markings on the road along the vehicle's itinerary. Said traffic lane departure determination means is adapted in one variant to activating overhead view generation if the vehicle crosses lane markings and thereby enters an adjacent traffic lane. Said traffic lane departure determination means is adapted in one variant to activate warnings if lane, markings are crossed by the vehicle.

Said overhead view generation activation means 120 comprise traffic lane determination means 126 to provide information about access to adjacent traffic lanes.

Said traffic lane determination means 126 comprise in one variant camera means 126a configured to determine road markings which represent adjacent traffic lanes.

Said traffic lane determination means 126 comprise in one variant itinerary determination means 126b adapted to provide predetermined characteristics of the carriageway along the vehicle's itinerary, including the presence of adjacent traffic lanes, types of roads and the vehicle's location along its itinerary. Said itinerary determination means is configured in one variant to provide a predetermined route for the vehicle, making it possible to pre-programme a desired route for the vehicle.

Said itinerary determination means 126b comprise in one variant a map information unit 126b1 containing map data comprising said characteristics of the carriageway along the vehicle's itinerary such as number of traffic lanes and types of road, e.g. motorways, in order thereby to provide information about access to adjacent traffic lanes. A pre-programmed route may thus include changes of traffic lane.

Said itinerary determination means 126b further comprise vehicle location determination means 126b1 in the form of a geographical position determination system, i.e. GPS, to identify the vehicle's location at the time of the respective braking process.

Said overhead view generation activation means 120 comprise activation means 127 for manual activation.

Said overhead view generation activation means 120 comprise object determination means 128 to determine objects in adjacent traffic lanes. Said object determination means comprise in one variant radar means, lidar means and/or ultrasonic means. Said object determination means comprises in one variant camera means which in one variant has image processing functions, stereo camera means, 3D camera means, so-called PMD cameras, for detection of 3D data in real time.

Said overhead view generation activation means 120 comprise traffic density determination means 129 to determine external information about traffic density along the vehicle's itinerary.

The system I further comprises overhead view control means 130 to cause said existing function to generate an overhead view comprising traffic information about adjacent traffic lanes in accordance with the operator's intentions with regard to the driving of the vehicle. Said overhead view control means therefore processes image information in such a way that the overhead image presented represents information about traffic lanes adjacent to the vehicle so that the accident risk pertaining to prospective lane changes may be minimised. Said overhead view control means 130 is in one variant an integral part of the electronic control unit 100.

In one embodiment, the system comprises, for the respective vehicle, in one variant of said overhead view control means 130, parameters for specifically adapted presetting for presentation of said overhead image. In one axle configuration of the vehicle said parameters comprise the vehicle's height, its cab type and the like to ensure that correct overhead views are always presented. Said parameters are in one variant integrated in the electronic control unit 100 for processing upon activation of overhead view.

The system I further comprises speed determination means 140 to determine the vehicle's speed.

The system I further comprises information presentation means 150 to present said information for the vehicle's operator when necessary. Said information presentation means comprises in one variant a display unit situated close to the driver and visible to him/her.

The electronic control unit 100 is signal-connected to said traffic information gathering means 110, comprising camera means situated round the vehicle to gather information about traffic in traffic lanes adjacent to the vehicle, via a link 10, enabling the electronic control unit to receive from the traffic information gathering means a signal which represents local image data concerning the surroundings and any traffic in traffic lanes adjacent to the vehicle.

The electronic control unit 100 is signal-connected to said overhead view generation activation means 120 for activating an existing function of the vehicle for generating an overhead view of the vehicle, via a link 20 which enables the electronic control unit to receive from the overhead view generation activation means a signal which represents activation data for activation of overhead image generation.

The electronic control unit 100 is signal-connected to said driving direction indication means 122 via a link 22, enabling it to receive from said means a signal which represents driving direction data for the vehicle's intended driving direction, here its intended lane changes.

The electronic control unit 100 is signal-connected to said traffic lane departure determination means 124, enabling it to receive from said means a signal which represents traffic lane departure data.

The electronic control unit 100 is signal-connected to said traffic lane determination means 126 via a link 26, enabling it to receive from said means a signal which represents traffic lane data for presence of adjacent traffic lanes.

The electronic control unit 100 is signal-connected to said camera means 126a of the traffic lane determination means 126 via a link 26a, enabling it to receive from said camera means a signal which represents traffic lane data for presence of adjacent traffic lanes.

The electronic control unit 100 is signal-connected to said itinerary determination means 126b of the traffic lane determination means 126 via a link 26b, enabling it to receive from said itinerary determination means a signal which represents itinerary data comprising location data from the vehicle location determination means 126b2 and map data from the map information unit 126b1, for determination of road characteristics comprising determination of presence of adjacent traffic lanes.

The electronic control unit 100 is signal-connected to said activation means for manual activation via a link 27, enabling it to receive from said means a signal which represents activation data for manual activation of existing functions for generating an overhead view.

The electronic control unit 100 is signal-connected to said object determination means 128 via a link 28, enabling it to receive from said means a signal which represents object data for presence of objects close to adjacent traffic lanes.

The electronic control unit 100 is signal-connected to said traffic density determination means 129 via a link 29, enabling it to receive from said means a signal which represents traffic density data for traffic densities close to the vehicle.

The electronic control unit 100 is signal-connected to said speed determination means 140 via a link 40, enabling it to receive from said means a signal which represents vehicle speed data for the vehicle's speed.

The electronic control unit 100 is adapted to process said local image data from said traffic information gathering means 110 comprising camera means situated round the vehicle in order to create an overhead view of the vehicle. Said processing of said local image data is arranged to be conducted by means of an image processing unit means 130 integrated in the electronic control unit 100. Alternatively, the image processing unit may be a separate unit connected to the electronic control unit 100.

The electronic control unit 100 is adapted to process said activation data from said overhead view generation activation means 120, which activation takes place on the basis of said activation data, i.e. if said activation data fulfil certain activation criteria such as the driver's intention to change lanes, prospective objects/obstacles, vehicle speed, traffic density and/or vehicle departure from current lane. The electronic control unit 100 is adapted to thereafter use said overhead view control means 130 to provide on the basis of said activation data an overhead view comprising traffic information about adjacent traffic lanes in accordance with the operator's intentions with regard to the driving of the vehicle.

The electronic control unit 100 is adapted to process said activation data from said overhead view generation activation means 120 comprising said driving direction data, lane departure data, traffic lane data, manual activation data, object data and/or said traffic density data, and activation takes place if said data fulfil certain criteria. In one variant the electronic control unit is adapted to process said traffic lane data from said traffic lane determination means 126 comprising predetermined routes from said itinerary determination means. The electronic control unit 100 is thereafter adapted to use said overhead view control means 130 to provide on the basis of said activation data an overhead view comprising traffic information about adjacent traffic lanes in accordance with the operator's intentions with regard to the driving of the vehicle.

The electronic control unit 100 is adapted to process said speed data and said activation data, and said activation is arranged to take place if said activation data fulfil certain criteria and said speed exceeds a predetermined value.

The electronic control unit 100 is adapted to activate the generation of said overhead view automatically if predetermined criteria for said driving direction data, traffic lane departure data, traffic lane data, e.g. that a predetermined route requires a lane change, object data, traffic density data and/or said speed data are fulfilled.

The electronic control unit 100 is adapted to process said manual activation data and to activate the generation of said overhead view if said manual activation data fulfil a predetermined criterion, i.e. if said activation means is activated by the driver. The activation means may be any desired operating means for activation, e.g. pressure means, rotary means, voice-controlled means or equivalent.

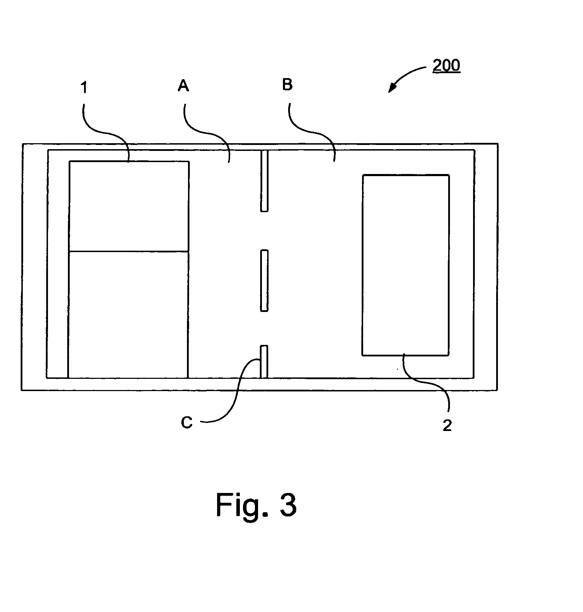

The electronic control unit 100 is signal-connected to said information presentation means 150 via a link 50, enabling it to send to said means a signal which represents overhead view presentation data for presentation of overhead views comprising traffic lanes adjacent to the vehicle, which in one variant are intended to be presented in a display unit, e.g. as in Fig. 3.

Fig. 3 schematically illustrates an overhead view according to an embodiment of the present invention presented in a display unit 200, showing at least part of the vehicle 1 which is provided with the system according to the present invention, including at least part of the traffic lane A in which it is travelling, and a traffic lane B adjacent to the vehicle, and in one variant the display unit shows the adjacent traffic lane B to which the driver intends to change and in which a further vehicle 2 is here depicted. The traffic lane is delineated by road markings C. The overhead view in the display unit 200 is arranged to be activated in accordance with embodiments described with reference to Fig. 2.

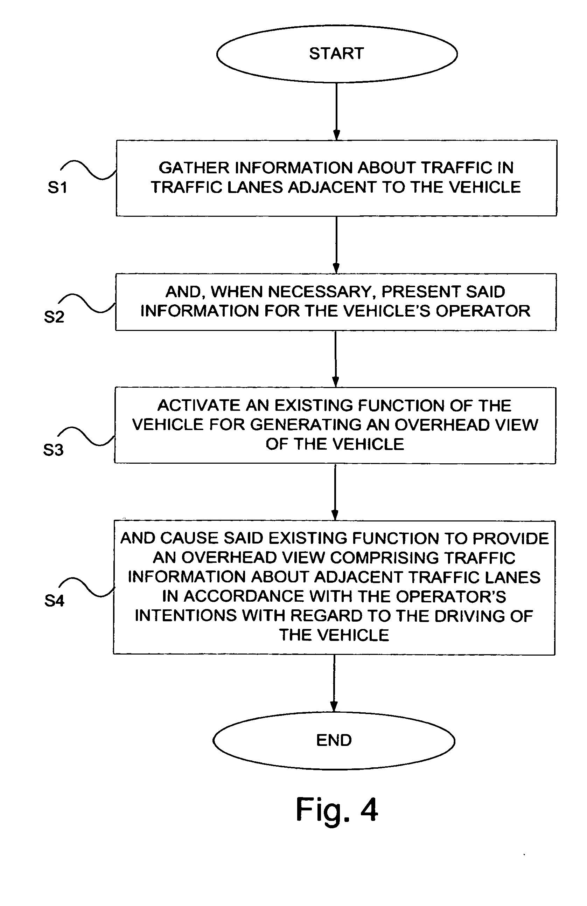

Fig. 4 is a schematic block diagram of a method for improving safety during driving of a motor vehicle according to an embodiment of the present invention.

In one embodiment the method for improving safety during driving of a motor vehicle comprises a first step S1 of gathering information about traffic in traffic lanes adjacent to the vehicle.

In one embodiment the method for improving safety during driving of a motor vehicle comprises a second step S2 of presenting said information for the vehicle's operator when necessary.

In one embodiment the method for improving safety during driving of a motor vehicle comprises a third step S3 of activating an existing function of the vehicle for generating an overhead view of the vehicle.

In one embodiment the method for improving safety during driving of a motor vehicle comprises a fourth step S4 of causing said existing function to provide an overhead view comprising traffic information about adjacent traffic lanes in accordance with the operator's intentions with regard to the driving of the vehicle.

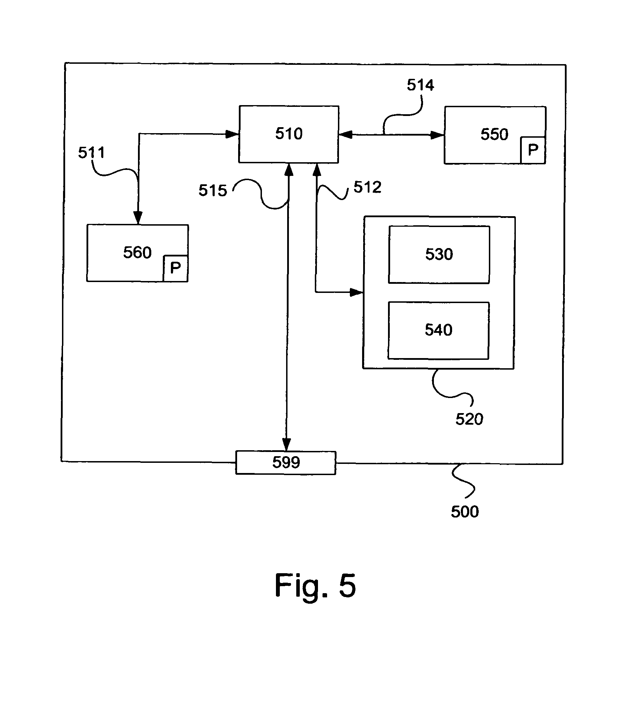

Figure 5 is a diagram of one version of a device 500. The control unit 100 described with reference to Figure 2 may in one version comprise the device 500. The device 500 comprises a non-volatile memory 520, a data processing unit 510 and a read/write memory 550. The non-volatile memory has a first memory element 530 in which a computer programme, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory has also a second memory element 540.

A proposed computer programme P comprises routines for improving safety during driving of a motor vehicle according to the innovative method. The programme P comprises routines for gathering information about traffic in traffic lanes adjacent to the vehicle. It comprises routines for presenting said information for the vehicle's operator when necessary. It comprises routines for activating an existing function of the vehicle for generating an overhead view of the vehicle. It comprises routines for causing said existing function to provide an overhead view comprising traffic information about adjacent traffic lanes in accordance with the operator's intentions with regard to the driving of the vehicle. The programme P may be stored in an executable form or in compressed form in a memory 560 and/or in a read/write memory 550.

Where the data processing unit 510 is described as performing a certain function, it means that it conducts a certain part of the programme stored in the memory 560, or a certain part of the programme stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit via a data bus 511. The read/write memory 550 is adapted to communicate with the data processing unit via a data bus 514. The links associated for example with the control unit 100 may be connected to the data port.

When data are received on the data port 599, they are stored temporarily in the second memory element 540. When input data received have been temporarily stored, the data processing unit 510 is prepared to conduct code execution as described above. The signals received on the data port may be used by the device 500 to gather information about traffic in traffic lanes adjacent to the vehicle. The signals received on the data port may be used by the device 500 to present said information for the vehicle's operator when necessary. The signals received on the data port may be used by the device 500 to activate an existing function of the vehicle for generating an overhead view of the vehicle. The signals received on the data port may be used by the device 500 to cause said existing function to provide an overhead view comprising traffic information about adjacent traffic lanes in accordance with the operator's intentions with regard to the driving of the vehicle.

Parts of the methods herein described may be conducted by the device 500 by means of the data processing unit 510 which runs the programme stored in the memory 560 or the read/write memory 550. When the device 500 runs the programme, methods herein described are executed.

The above description of the preferred embodiments of the present invention is provided for illustrative and descriptive purposes. It is not intended to be exhaustive nor to restrict the invention to the variants described. Many modifications and variations will obviously suggest themselves to one skilled in the art. The embodiments have been chosen and described in order best to explain the principles of the invention and their practical applications and thus make it possible for one skilled in the art to understand the invention for different embodiments and with the various modifications appropriate to the intended use.

## Claims

1. A method for improving safety during driving of a motor vehicle, comprising the steps of gathering (S1) information about traffic in traffic lanes adjacent to the vehicle and, when necessary, presenting (S2) said information for the vehicle's operator, activating (S3) an existing function of the vehicle for generating an overhead view of the vehicle, and causing (S4) said existing function to provide an overhead view which comprises traffic information about adjacent traffic lanes in accordance with the operator's intentions with regard to the driving of the vehicle, wherein the step of activating said existing function of the vehicle for generating an overhead view takes place before the operator changes lanes, **characterised by** the step of activating said existing function of the vehicle for generating an overhead view takes place automatically but only at above a certain speed of the vehicle.

2. A method according to claim 1, in which the step of activating said existing function of the vehicle for generating an overhead view takes place automatically upon and/or before lateral movements of the vehicle.

3. A method according to claim 1 or 2, in which said automatic activation takes place upon driving direction indication, vehicle departure from traffic lane, information about access to adjacent traffic lanes, external information about traffic density along the vehicle's itinerary.

4. A system (I) for improving safety during driving of a motor vehicle (1), comprising means (100, 100) for gathering information about traffic in traffic lanes adjacent to the vehicle and means (100, 150) for, when necessary, presenting said information for the vehicle's operator, means (100, 120) for activating an existing function of the vehicle for generating an overhead view of the vehicle, and means (100, 130) for causing said existing function to provide an overhead view which comprises traffic information about adjacent traffic lanes in accordance with the operator's intentions with regard to the driving of the vehicle, wherein said means (100, 120) for activating said existing function of the vehicle for generating an overhead view comprise means (100, 122, 126, 128, 129) for activating said function before the operator changes lanes, **characterised in that** said means for activating said existing function of the vehicle for generating an overhead view comprise means (100, 140) for activating said function automatically but only at above a certain speed of the vehicle.

5. A system according to claim 4, in which said means (100, 120) for activating said existing function of the vehicle for generating an overhead view comprise means (100, 122, 124, 126) for automatically activating said function upon and/or before lateral movements of the vehicle.

6. A system according to claim 5, in which said means (100, 122, 124, 126, 128, 129) for automatic activation comprise means (122) for driving direction indication, means (124) for determination of vehicle departure from traffic lane, means (126) for providing information about access to adjacent traffic lanes, means (129) for determination of external information about traffic density along the vehicle's itinerary.

7. A motor vehicle (1) provided with a system according to claims 4-6.

8. A computer programme (P) for improving safety during driving of a motor vehicle, which programme (P) comprises programme code which, when run by an electronic control unit (100) or another computer (500) connected to the electronic control unit (100), enables the electronic control unit (100) to perform steps according to the method of any one of claims 1-3.

9. A computer programme product comprising a digital storage medium which stores the computer programme according to claim 8.

## Patentansprüche

1. Verfahren zum Verbessern der Sicherheit im Fahrbetrieb eines Kraftfahrzeugs, aufweisend die Schritte des Erfassens (S1) von Informationen über einen Verkehr in zum Fahrzeug benachbarten Fahrbahnen und, falls notwendig, des Darstellens (S2) der Informationen für den Fahrzeugführer, des Aktivierens (S3) einer vorhandenen Fahrzeugfunktion zum Erzeugen einer Fahrzeugdraufsicht, und des Bewirkens (S4), dass die vorhandene Funktion eine Draufsicht bereitstellt, die Verkehrsinformationen über benachbarte Fahrbahnen entsprechend den Intentionen des Fahrzeugführers bezüglich des Fahrens des Fahrzeugs aufweist, wobei der Schritt des Aktivierens der vorhandenen Fahrzeugfunktion zum Erzeugen einer Draufsicht erfolgt, bevor der Fahrzeugführer die Fahrbahn wechselt,
**dadurch gekennzeichnet, dass** der Schritt des Aktivierens der vorhandenen Fahrzeugfunktion zum Erzeugen einer Draufsicht automatisch erfolgt, jedoch nur oberhalb einer bestimmten Fahrzeuggeschwindigkeit.

2. Verfahren nach Anspruch 1, bei dem der Schritt des Aktivierens der vorhandenen Fahrzeugfunktion zum Erzeugen einer Draufsicht bei und/oder vor Lateralbewegungen des Fahrzeugs automatisch erfolgt.

3. Verfahren nach einem der Ansprüche 1 oder 2, bei dem die automatische Aktivierung auf eine Fahrtrichtungsangabe, ein Verlassen des Fahrzeugs von einer Fahrbahn, Informationen über einen Zugang zu angrenzenden Fahrbahnen, externe Verkehrsdichteinformationen entlang der Reiseroute des Fahrzeugs hin erfolgt.

4. System (I) zum Verbessern der Sicherheit im Fahrbetrieb eines Kraftfahrzeugs (1), umfassend Einheiten (100, 100) zum Erfassen von Informationen über einen Verkehr auf zum Fahrzeug benachbarten Fahrbahnen und, falls notwendig, Einheiten (100, 150) zum Darstellen der Informationen für den Fahrzeugführer, Einheiten (100, 120) zum Aktivieren einer vorhandenen Fahrzeugfunktion zum Erstellen einer Fahrzeugdraufsicht, und Einheiten (100, 130) zum Bewirken, dass die vorhandene Funktion eine Draufsicht bereitstellt, die Verkehrsinformationen über benachbarte Fahrbahnen entsprechend den Intentionen des Fahrzeugführers bezüglich des Fahrens des Fahrzeugs aufweist, wobei die Einheiten (100, 120) zum Aktivieren der vorhandenen Fahrzeugfunktion zum Erzeugen einer Draufsicht Einheiten (100, 122, 126, 128, 129) zum Aktivieren der Funktion aufweisen, bevor der Fahrzeugführer die Fahrbahn wechselt,
**dadurch gekennzeichnet, dass** die Einheiten zum Aktivieren der vorhandenen Fahrzeugfunktion zum Erzeugen einer Draufsicht Einheiten (100, 140) zum automatischen Aktivieren der Funktion aufweisen, jedoch nur oberhalb einer bestimmten Fahrzeuggeschwindigkeit.

5. System nach Anspruch 4, bei dem die Einheiten (100, 120) zum Aktivieren der vorhandenen Fahrzeugfunktion zum Erzeugen einer Draufsicht Einheiten (100, 122, 124, 126) zum automatischen Aktivieren der Funktion bei und/oder vor Lateralbewegungen des Fahrzeugs aufweisen.

6. System nach Anspruch 5, bei dem die Einheiten (100, 122, 124, 126, 128, 129) zum automatischen Aktivieren Einheiten (122) zum Anzeigen der Fahrtrichtung, Einheiten (124) zum Ermitteln eines Verlassens des Fahrzeugs von einer Fahrbahn, Einheiten (126) zum Bereitstellen von Informationen über einen Zugang zu benachbarten Fahrbahnen, Einheiten (129) zum Ermitteln von externen Verkehrsdichteinformationen entlang der Reiseroute des Fahrzeugs aufweisen.

7. Kraftfahrzeug (1), das mit einem System nach einem der Ansprüche 4 bis 6 bereitgestellt ist.

8. Computerprogramm (P) zum Verbessern der Sicherheit im Fahrbetrieb eines Kraftfahrzeugs, wobei das Programm (P) einen Programmcode aufweist, der dann, wenn dieser durch eine elektronische Steuerungseinheit (100) oder durch einen anderen mit der elektronischen Steuerungseinheit (100) verbundenen Computer (500) ausgeführt wird, die elektronische Steuerungseinheit (100) dazu befähigt, Schritte gemäß dem Verfahren nach einem der Ansprüche 1 bis 3 durchzuführen.

9. Computerprogrammprodukt, aufweisend ein digitales Speichermedium, das das Computerprogramm nach Anspruch 8 speichert.

## Revendications

1. Procédé pour améliorer la sécurité pendant la conduite d'un véhicule automobile, comprenant les étapes de collecter (S1) une information concernant la circulation dans des voies de circulation adjacentes au véhicule et, si nécessaire, de présenter (S32) ladite information au conducteur du véhicule, d'activer (S3) une fonction existante du véhicule pour générer une vue de dessus du véhicule, et d'amener (S4) ladite fonction existante à fournir une vue de dessus qui comporte une information relative à la circulation dans les voies de circulation adjacentes en fonction d'intentions du conducteur vis-à-vis de la conduite du véhicule, dans lequel l'étape d'activer ladite fonction existante du véhicule pour générer une vue de dessus est réalisée avant que le conducteur ne change de couloir, **caractérisé en ce que** l'étape d'activer ladite fonction existante du véhicule pour générer une vue de dessus est réalisée automatiquement mais seulement au-dessus d'une certaine vitesse du véhicule.

2. Procédé selon la revendication 1, dans lequel l'étape d'activer ladite fonction existante du véhicule pour générer une vue de dessus est réalisée automatiquement lors de mouvements latéraux du véhicule et/ou antérieurement à de tels mouvements latéraux.

3. Procédé selon la revendication 1 ou 2, dans lequel ladite activation automatique est réalisée lors d'une indication de direction de conduite, d'un écart du véhicule par rapport à une voie de circulation, en présence d'une information sur l'accès aux voies de circulation adjacentes, ou en présence d'une information externe concernant la densité de la circulation sur l'itinéraire du véhicule.

4. Système (1) pour améliorer la sécurité pendant la conduite d'un véhicule automobile (1), comprenant des moyens (100, 100) pour collecter une information concernant la circulation dans des voies de circulation adjacentes au véhicule et des moyens (100, 150) pour présenter si nécessaire ladite information au conducteur du véhicule, des moyens (100, 120) pour activer une fonction existante du véhicule pour générer une vue de dessus du véhicule, et des moyens (100, 130) pour amener ladite fonction existante à fournir une vue de dessus qui comporte une information relative à la circulation dans les voies de circulation adjacentes en fonction d'intentions du conducteur vis-à-vis de conduite du véhicule, dans lequel lesdits moyens (100, 120) pour activer ladite fonction existante du véhicule pour générer une vue de dessus aérienne comprennent des moyens (100, 122, 126, 128, 129) pour activer la fonction avant que le conducteur ne change de voie de circulation, **caractérisé en ce que** lesdits moyens servant à activer ladite fonction existante du véhicule pour générer une vue de dessus comprennent des moyens (100, 140) pour activer ladite fonction automatiquement mais seulement au-dessus d'une certaine vitesse du véhicule.

5. Système selon la revendication 4, dans lequel lesdits moyens (100, 120) pour activer ladite fonction existante du véhicule pour générer une vue de dessus comprennent des moyens (100, 122, 124, 126) pour activer automatiquement ladite fonction lors de mouvements latéraux du véhicule ou antérieurement à de tels mouvements latéraux.

6. Système selon la revendication 5, dans lequel lesdits moyens (100, 122, 124, 126, 128, 129) pour l'activation automatique comprennent des moyens (122) pour l'indication de la direction de conduite, des moyens (124) pour la détermination d'un écart du véhicule par rapport à une voie de circulation, des moyens (126) pour fournir une information concernant l'accès aux voies de circulation adjacentes, des moyens (129) pour la détermination d'une information externe concernant la densité de la circulation sur l'itinéraire du véhicule.

7. Véhicule automobile (1) équipé d'un système selon les revendications 4 à 6.

8. Programme d'ordinateur (P) pour améliorer la sécurité pendant la conduite d'un véhicule automobile, lequel programme (P) comprend un code de programme qui, lorsqu'il est exécuté par une unité de commande électronique (100) ou par un autre ordinateur (500) connecté à l'unité de commande électronique (100), permet à l'unité de commande électronique (100) d'exécuter des étapes selon le procédé de l'une quelconque des revendications 1 à 3.

9. Produit programme d'ordinateur comprenant un support de stockage numérique qui stocke le programme d'ordinateur selon la revendication 8.
